(19) Europäisches Patentamt
European Patent Office
Office européen des brevets

(11) **EP 4 333 476 A1**

(12) **EUROPEAN PATENT APPLICATION**
published in accordance with Art. 153(4) EPC

(43) Date of publication:
06.03.2024 Bulletin 2024/10

(21) Application number: 22796137.2

(22) Date of filing: 27.04.2022

(51) International Patent Classification (IPC):
H04W 8/00 (2009.01)    H04W 28/02 (2009.01)
H04W 72/04 (2023.01)    H04W 4/40 (2018.01)
H04W 92/18 (2009.01)

(52) Cooperative Patent Classification (CPC):
H04W 4/40; H04W 8/00; H04W 28/02;
H04W 72/04; H04W 92/18; Y02D 30/70

(86) International application number:
PCT/KR2022/006028

(87) International publication number:
WO 2022/231305 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.04.2021 US 202163181207 P

(71) Applicant: LG Electronics Inc.
Yeongdeungpo-gu
Seoul 07336 (KR)

(72) Inventors:
• BACK, Seoyoung
  Seoul 06772 (KR)
• PARK, Giwon
  Seoul 06772 (KR)
• LEE, Seungmin
  Seoul 06772 (KR)
• HONG, Jongwoo
  Seoul 06772 (KR)

(74) Representative: Mooser, Sebastian Thomas
Wuesthoff & Wuesthoff
Patentanwälte PartG mbB
Schweigerstraße 2
81541 München (DE)

(54) **OPERATION METHOD AND DEVICE FOR UE RELATED TO SIDELINK DISCOVERY RESOURCE REQUEST AND ALLOCATION IN WIRELESS COMMUNICATION SYSTEM**

(57) **Abstract:** One embodiment relates to an operation method related to a sidelink of a base station in a wireless communication system, comprising steps in which: the base station configures a logical channel group ID (LCG-ID) or logical channel ID (LC-ID); the base station transmits, to a UE, information related to the LCG-ID or LC-ID; the base station receives a scheduling request (SR) or buffer status report (BSR) from the UE; and the base station transmits resource allocation information to the UE, wherein the base station recognizes, on the basis of the configuring of the LCG-ID related to sidelink discovery by the base station, a resource request related to discovery from the LCG-ID included in the BSR, and the base station recognizes, on the basis of the configuring of the LC-ID related to the sidelink discovery by the base station, the resource request related to discovery from information notifying of the discovery resource request included in the SR or BSR.

FIG. 12

**EP 4 333 476 A1**

**Description**

**TECHNICAL FIELD**

The following description relates to a wireless communication system, and more particularly, to a method and device related to a technology in which a user equipment (UE) requests a discovery request in a sidelink relay and a base station (BS) allocates a resource for discovery.

**BACKGROUND**

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

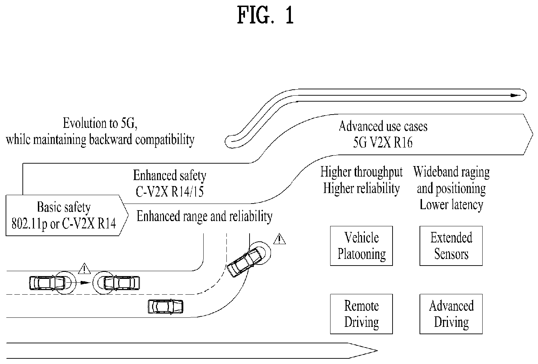

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## DETAILED DESCRIPTION

### TECHNICAL SOLUTION

An object of embodiment(s) is a technology in which a user equipment (UE) requests a discovery request in a sidelink relay and a base station (BS) allocates a resource for discovery.

### TECHNICAL SOLUTION

According to an embodiment, a sidelink-related operating method of a base station (BS) in a wireless communication system includes configuring a logical channel group ID (LCG-ID) or a logical channel ID (LC-ID), by the BS, transmitting information related to the LCG-ID or the LC-ID to a user equipment (UE), by the BS, receiving a scheduling request (SR) or a buffer status report (BSR) from the UE, by the BS, and transmitting resource allocation information to the UE, by the BS, wherein the BS recognizes a resource request related to discovery from an LCG-ID included in the BSR based on the BS configuring an LCG-ID related to sidelink discovery, and the BS recognizes a resource request related to discovery from information indicating a discovery resource request included in the SR or the BSR based on the BS configuring an LC-ID related to sidelink discovery.

According to an embodiment, a base station (BS) device in a wireless communication system includes at least one processor, and at least one computer memory operatively connected to the at least one processor and configured to store instructions that when executed causes the at least one processor to perform operations including configuring a logical channel group ID (LCG-ID) or a logical channel ID (LC-ID), transmitting information related to the LCG-ID or the LC-ID to a user equipment (UE), receiving a scheduling request (SR) or a buffer status report (BSR) from a user equipment (UE), and transmitting resource allocation information to the UE, wherein the BS recognizes a resource request related to discovery from the LCG-ID included in the BSR based on the BS configuring an LCG-ID related to sidelink discovery, and the BS recognizes a resource request related to discovery from information indicating a discovery resource request included in the SR or the BSR based on the BS configuring an LC-ID related to sidelink discovery.

According to an embodiment, a processor for performing operations for a base station (BS) in a wireless communication system is provided, the operations including configuring a logical channel group ID (LCG-ID) or a logical channel ID (LC-ID), transmitting information related to the LCG-ID or the LC-ID to a user equipment (UE), receiving a scheduling request (SR) or a buffer status report (BSR) from the UE, and transmitting resource allocation information to the UE, wherein the BS recognizes a resource request related to discovery from the LCG-ID included in the BSR based on the BS configuring an LCG-ID related to sidelink discovery, and the BS recognizes a resource request related to discovery from information indicating a discovery resource request included in the SR or the BSR based on the BS configuring an LC-ID related to sidelink discovery.

In a non-volatile computer-readable storage medium for storing at least one computer program including an instruction for causing at least one processor to perform operations for a base station (BS) when being executed by the at least one processor, the operations include configuring a logical channel group ID (LCG-ID) or a logical channel ID (LC-ID), transmitting information related to the LCG-ID or the LC-ID to a user equipment (UE), receiving a scheduling request (SR) or a buffer status report (BSR) from the UE, and transmitting resource allocation information to the UE, wherein the BS recognizes a resource request related to discovery from the LCG-ID included in the BSR based on the BS configuring an LCG-ID related to sidelink discovery, and the BS recognizes a resource request related to discovery from information indicating a discovery resource request included in the SR or the BSR based on the BS configuring an LC-ID related to sidelink discovery.

A sidelink-related operating method of a user equipment (UE) in a wireless communication system includes receiving information related to a logical channel group ID (LCG-ID) or a logical channel ID (LC-ID) from a base station (BS), by the UE, transmitting a scheduling request (SR) or a buffer status report (BSR) to the BS, by the UE, and receiving resource allocation information from the BS, by the UE, wherein the UE indicates a resource request related to discovery through an LCG-ID included in the BSR based on the BS configuring an LCG-ID related to sidelink discovery, and the UE indicates a resource request related to discovery through the SR or BSR including information indicating a discovery resource request based on the BS configuring an LC-ID related to sidelink discovery.

According to an embodiment, a user equipment (UE) device in a wireless communication system includes at least one processor, and at least one computer memory operatively connected to the at least one processor and configured to store instructions that when executed causes the at least one processor to perform operations including receiving information related to a logical channel group ID (LCG-ID) or a logical channel ID (LC-ID) from a base station (BS), transmitting a scheduling request (SR) or a buffer status report (BSR) to the BS, and receiving resource allocation information from the BS, wherein the UE indicates a resource request related to discovery through an LCG-ID included in the BSR based on the BS configuring an LCG-ID related to sidelink discovery, and the UE indicates a resource request related to discovery through the SR or BSR including information indicating a discovery resource request based on the BS configuring an LC-ID related to sidelink discovery.

The BS may transmit information indicating that the LCG-ID is related to sidelink discovery, to the UE, based on the BS configuring the LCG-ID related to sidelink discovery.

The BS may transmit information indicating that the LC-ID is related to sidelink discovery, to the UE, based on the BS configuring the LC-ID related to sidelink discovery.

The SR may be generated for sidelink discovery.

The resource allocation information may indicate a time-frequency resource included in a discovery dedicated resource pool.

The resource allocation information may be included in a DCI format and transmitted to the UE.

The resource allocation information may include a resource pool ID.

The BSR may include an LCG-ID related to a destination index and a buffer size.

## ADVANTAGEOUS EFFECTS

According to an embodiment, a resource request and resource allocation for discovery may be efficiently performed without using a discovery dedicated channel like the existing LTE. Additionally, according to an embodiment, a problem of not knowing whether a user equipment (UE) requests a discovery resource just by receiving a scheduling request (SR) or buffer status report (BSR) including a logical channel group ID (LCG-ID).

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram comparing vehicle-to-everything (V2X) communication based on pre-new radio access technology (pre-NR) with V2X communication based on NR;
FIG. 2 is a diagram illustrating the structure of a long term evolution (LTE) system according to an embodiment of the present disclosure;
FIG. 3 is a diagram illustrating user-plane and control-plane radio protocol architectures according to an embodiment of the present disclosure;
FIG. 4 is a diagram illustrating the structure of an NR system according to an embodiment of the present disclosure;
FIG. 5 is a diagram illustrating functional split between a next generation radio access network (NG-RAN) and a 5th generation core network (5GC) according to an embodiment of the present disclosure;
FIG. 6 is a diagram illustrating the structure of an NR radio frame to which embodiment(s) of the present disclosure is applicable;
FIG. 7 is a diagram illustrating a slot structure of an NR frame according to an embodiment of the present disclosure;

FIG. 8 is a diagram illustrating radio protocol architectures for sidelink (SL) communication according to an embodiment of the present disclosure;

FIG. 9 is a diagram illustrating radio protocol architectures for SL communication according to an embodiment of the present disclosure;

FIG. 10 illustrates a procedure of V2X or SL communication by a UE depending on a transmission mode according to an embodiment of the disclosure.

FIGS. 11 to 12 are diagrams for explaining embodiment(s).

FIGS. 13 to 19 are diagrams for explaining various devices to which embodiment(s) are applicable.

**BEST MODE**

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

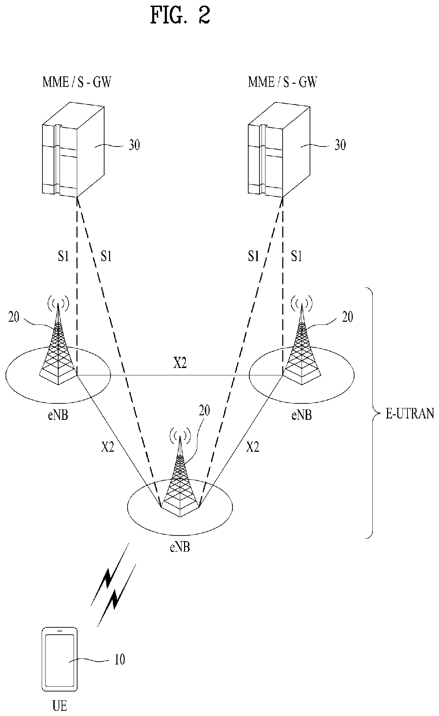

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

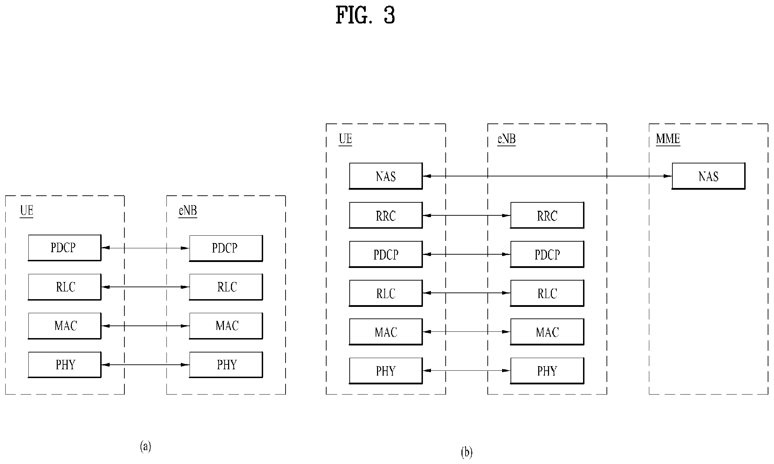

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

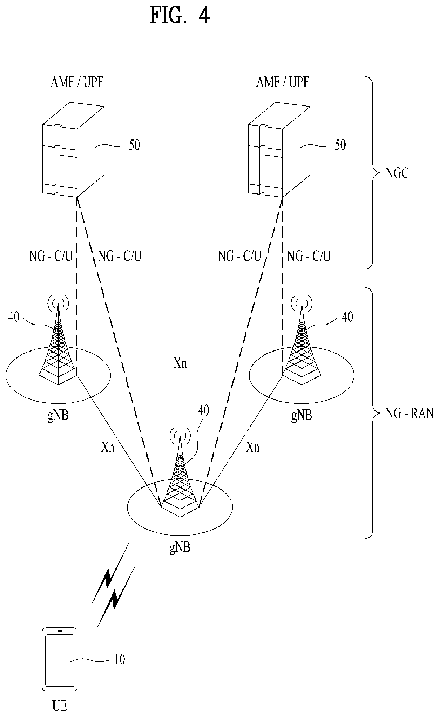

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

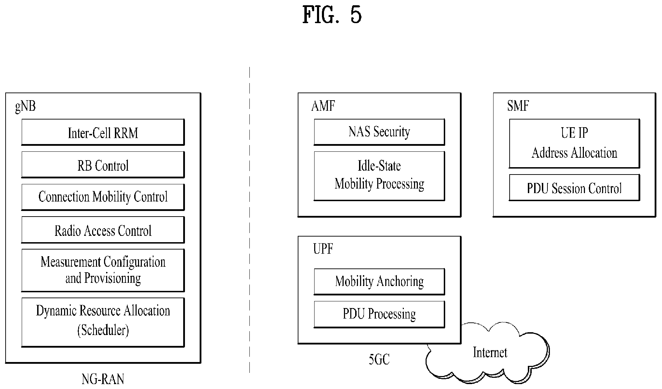

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

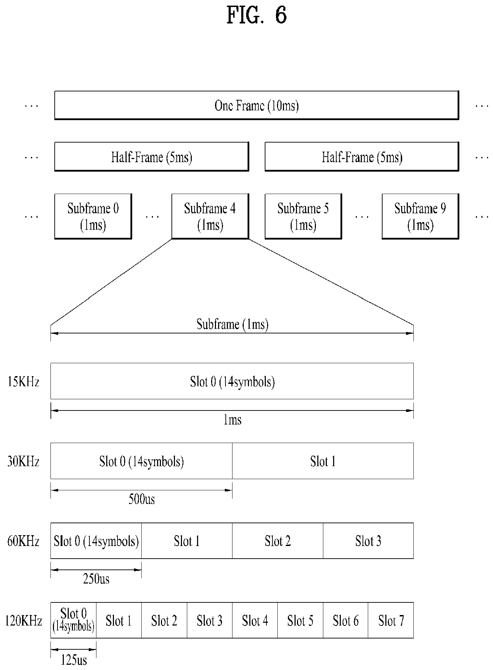

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15kHz, a wide area in traditional cellular bands may be supported, while with an SCS of 30kHz/60kHz, a dense urban area, a lower latency, and a wide carrier bandwidth may be supported. With an SCS of 60kHz or higher, a bandwidth larger than 24.25GHz may be supported to overcome phase noise.

An NR frequency band may be defined by two types of frequency ranges, FR1 and FR2. The numerals in each frequency range may be changed. For example, the two types of frequency ranges may be given in Table 3. In the NR system, FR1 may be a "sub 6GHz range" and FR2 may be an "above 6GHz range" called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerals in a frequency range may be changed in the NR system. For example, FR1 may range from 410MHz to 7125MHz as listed in Table 4. That is, FR1 may include a frequency band of 6GHz (or 5850, 5900, and 5925MHz) or above. For example, the frequency band of 6GHz (or 5850, 5900, and 5925MHz) or above may include an unlicensed band. The unlicensed band may be used for various purposes, for example, vehicle communication (e.g., autonomous driving).

Table 4

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

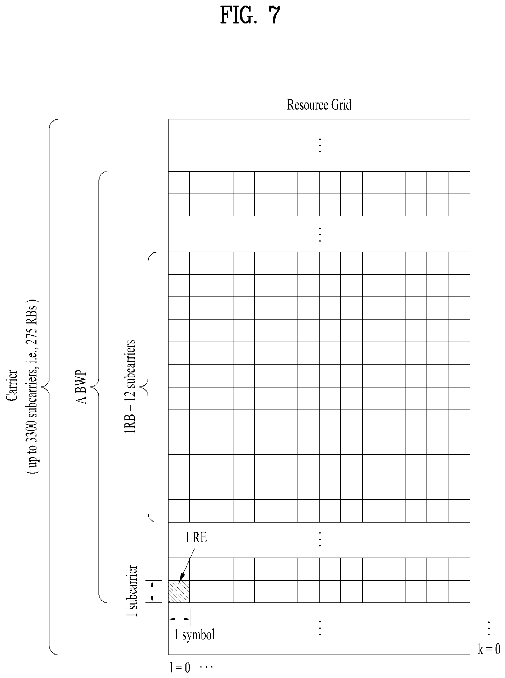

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

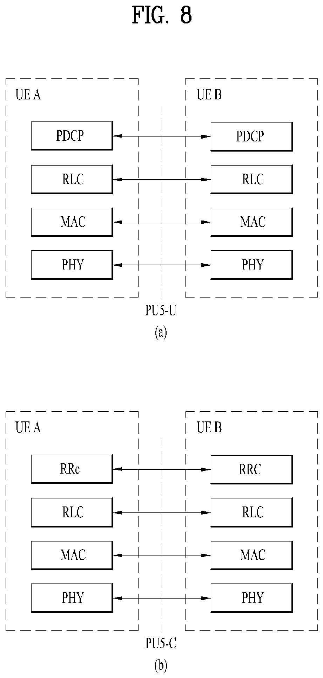

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

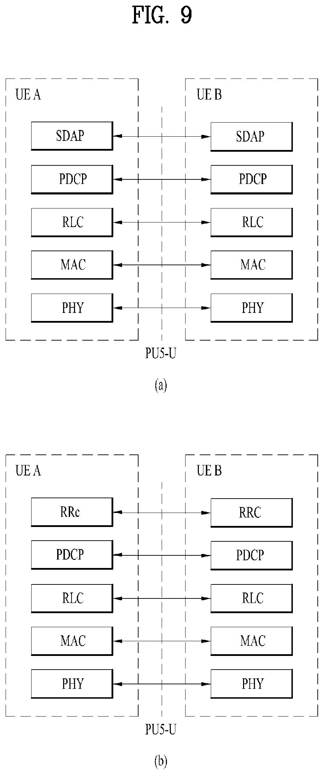

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

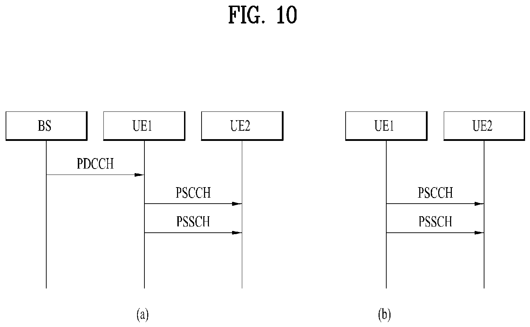

FIG. 10 illustrates a procedure of V2X or SL communication by a UE depending on a transmission mode according to an embodiment of the disclosure. The embodiment of FIG. 10 may be combined with various embodiments of the present disclosure. In various embodiments of the present disclosure, the transmission mode may be referred to as a mode or a resource allocation mode. Hereinafter, for convenience of description, a transmission mode in LTE may be referred to as an LTE transmission mode, and a transmission mode in NR may be referred to as an NR resource allocation mode.

For example, FIG. 10A illustrates an operation of a UE related to an LTE transmission mode 1 or an LTE transmission mode 3. For example, FIG. 10A illustrates an operation of a UE related to an NR resource allocation mode 1. For example, the LTE transmission mode 1 may be applied to general SL communication, and the LTE transmission mode 3 may be applied to V2X communication.

For example, FIG. 10B illustrates an operation of a UE related to the LTE transmission mode 2 or the LTE transmission mode 4. For example, FIG. 10B illustrates an operation of a UE related to the NR resource allocation mode 2.

Referring to FIG. 10A, in the LTE transmission mode 1, the LTE transmission mode 3, or the NR resource allocation mode 1, a BS may schedule an SL resource to be used by a UE for SL transmission. For example, in operation S8000, the BS may transmit information related to an SL resource and/or information related to a UL resource to a first UE. For example, the UL resource may include a PUCCH resource and/or a PUSCH resource. For example, the UL resource may be a resource for reporting SL HARQ feedback to the BS.

For example, the first UE may receive information related to a dynamic grant (DG) resource and/or information related to a configured grant (CG) resource from the BS. For example, the CG resource may include a CG type 1 resource or a CG type 2 resource. In the present specification, the DG resource may be a resource configured/allocated to the first UE through downlink control information (DCI) by the BS. In the present specification, the CG resource may be a (periodic) resource configured/allocated to the first UE through a DCI and/or an RRC message by the BS. For example, in the case of the CG type 1 resource, the BS may transmit the RRC message including the information related to the CG resource to the first UE. For example, in the case of the CG type 2 resource, the BS may transmit the RRC message including the information related to the CG resource to the first UE, and the BS may transmit DCI related to activation or release of the CG resource to the first UE.

In operation S8010, the first UE may transmit a PSCCH (e.g., sidelink control information (SCI) or 1st-stage SCI) to a second UE based on the resource scheduling. In operation S8020, the first UE may transmit a PSSCH (e.g., 2nd-stage SCI, MAC PDU, or data) related to the PSCCH to the second UE. In operation S8030, the first UE may receive a PSFCH related to the PSCCH/PSSCH from the second UE. For example, the HARQ feedback information (e.g., NACK information or ACK information) may be received from the second UE through the PSFCH. In operation S8040, the first UE may transmit/report the HARQ feedback information to the BS through the PUCCH or the PUSCH. For example, the HARQ feedback information reported to the BS may be information generated based on the HARQ feedback information received from the second UE by the first UE. For example, the HARQ feedback information reported to the BS may be information generated based on a preconfigured rule by the first UE. For example, the DCI may be DCI for scheduling of SL. For example, a format of the DCI may be DCI format 3_0 or DCI format 3_1. Table 5 shows an example of DCI for scheduling of SL.

[Table 5]

| 7.3.1.4.1 Format 3_0 |
| --- |
| DCI format 3_0 is used for scheduling of NR PSCCH and NR PSSCH in one cell.<br>The following information is transmitted by means of the DCI format 3_0 with CRC scrambled by SL-RNTI or SL-CS-RNTI:<br><br>- Resource pool index $-\lceil \log_2 I \rceil$ **bits**, where $I$ is the number of resource pools for transmission configured by the higher layer parameter *sl-TxPoolScheduling.*<br>- Time gap - 3 bits determined by higher layer parameter *sl-DCI-ToSL-Trans,* as defined in clause 8.1.2.1 of [6, TS 38.214]<br>- HARQ process number - 4 bits.<br>- New data indicator - 1 bit.<br><br>- Lowest index of the subchannel allocation to the initial transmission - $\lceil \log_2(N_{\text{subChannel}}^{\text{SL}}) \rceil$ bits as defined in clause 8.1.2.2 of [6, TS 38.214]<br>- SCI format 1-A fields according to clause 8.3.1.1:<br>    - Frequency resource assignment.<br>    - Time resource assignment.<br><br>- PSFCH-to-HARQ feedback timing indicator $-\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]<br>- PUCCH resource indicator - 3 bits as defined in clause 16.5 of [5, TS 38.213].<br>- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.<br>- Counter sidelink assignment index - 2 bits<br>    - 2 bits as defined in clause 16.5.2 of [5, TS 38.213] if the UE is configured with *pdsch-HARQ-ACK-Codebook = dynamic*<br>    - 2 bits as defined in clause 16.5.1 of [5, TS 38.213] if the UE is configured with *pdsch-HARQ-ACK-Codebook = semi-static*<br>    - Padding bits, if required<br>If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.<br>    If the UE is configured to monitor DCI format 3_1 and the number of information bits in DCI format 3_0 is less than the payload of DCI format 3_1, zeros shall be appended to DCI format 3_0 until the payload size equals that of DCI format 3_1.<br>    7.3.1.4.2 Format 3_1<br>    DCI format 3_1 is used for scheduling of LTE PSCCH and LTE PSSCH in one cell. |

(continued)

|  | The following information is transmitted by means of the DCI format 3_1 with CRC scrambled by SL Semi-Persistent Scheduling V-RNTI: |
|---|---|
| - | Timing offset - 3 bits determined by higher layer parameter *sl-TimeOffsetEU-TRA-List,* as defined in clause 16.6 of [5, TS 38.213] |
| - | Carrier indicator -3 bits as defined in 5.3.3.1.9A of [11, TS 36.212]. |
| - | Lowest index of the subchannel allocation to the initial transmission - $\left\lceil \log_2(N_{\text{subchannel}}^{\text{SL}}) \right\rceil$ bits as defined in 5.3.3.1.9A of [11, TS 36.212]. |
| - | Frequency resource location of initial transmission and retransmission, as defined in 5.3.3.1.9A of [11, TS 36.212] |
| - | Time gap between initial transmission and retransmission, as defined in 5.3.3.1.9A of [11, TS 36.212] |
| - | SL index - 2 bits as defined in 5.3.3.1.9A of [11, TS 36.212] |
| - | SL SPS configuration index - 3 bits as defined in clause 5.3.3.1.9A of [11, TS 36.212]. |
| - | Activation/release indication - 1 bit as defined in clause 5.3.3.1.9A of [11, TS 36.212]. |

Referring to FIG. 10B, in the LTE transmission mode 2, the LTE transmission mode 4, or the NR resource allocation mode 2, the UE may determine an SL transmission resource in an SL resource configured by a BS/network or a preconfigured SL resource. For example, the configured SL resource or preconfigured SL resource may be a resource pool. For example, the UE may autonomously select and schedule a resource for SL transmission. For example, the UE may autonomously select a resource in the configured resource pool and may perform SL communication. For example, the UE may select a sensing and resource (re)selection procedure and may autonomously select a resource within a selection window. For example, the sensing may be performed in units of subchannels. For example, in operation S8010, the first UE that autonomously selects the resource in the resource pool may transmit a PSCCH (e.g., sidelink control information (SCI) or 1st-stage SCI) to the second UE using the resource. In operation S8020, the first UE may transmit a PSSCH (e.g., 2nd-stage SCI, MAC PDU, or data) related to the PSCCH to the second UE. In operation S8030, the first UE may receive a PSFCH related to the PSCCH/PSSCH from the second UE.

Referring to FIG. 10A or 10B, for example, the first UE may transmit SCI on the PSCCH to the second UE. Alternatively, for example, the first UE may transmit two consecutive SCIs (e.g., 2-stage SCI) on the PSCCH and/or the PSSCH to the second UE. In this case, the second UE may decode two consecutive SCIs (e.g., 2-stage SCI) for receiving the PSSCH from the first UE. In the present specification, the SCI transmitted on the PSCCH may be referred to as a 1st SCI, first SCI, 1st-stage SCI, or 1st-stage SCI format, and the SCI transmitted on the PSSCH may be referred to as a 2nd SCI, second SCI, 2nd-stage SCI, or 2nd-stage SCI format. For example, the 1st-stage SCI format may include SCI format 1-A, and the 2nd-stage SCI format may include SCI format 2-A and/or SCI format 2-B. Table 6 shows an example of the 1st-stage SCI format.

[Table 6]

8.3.1.1 SCI format 1-A

SCI format 1-A is used for the scheduling of PSSCH and 2nd-stage-SCI on PSSCH

The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment

$$-\log_2\left(\frac{N_{\text{subChannel}}^{\text{SL}}\left(N_{\text{subChannel}}^{\text{SL}}+1\right)}{2}\right)$$ bits when the

value of the higher layer parameter *sl-MaxNumPerReserve* is configured to 2;

otherwise

$$\log_2\left(\frac{N_{\text{subChannel}}^{\text{SL}}\left(N_{\text{subChannel}}^{\text{SL}}+1\right)\left(2N_{\text{subChannel}}^{\text{SL}}+1\right)}{6}\right)$$ bits when the value of

the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period $-\lceil \log_2 N_{\text{rsv\_period}} \rceil$ bits as defined in clause 16.4 of [5, TS 38.213], where $N_{\text{rsv\_period}}$ is the number of entries in the higher layer parameter *sl-ResourceReservePeriodList,* if higher layer parameter *sl-MultiReserveResource* is configured; 0 bit otherwise.

- DMRS pattern $-\lceil \log_2 N_{\text{pattern}} \rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList.*

- 2nd-stage SCI format - 2 bits as defined in Table 8.3.1.1-1.

- Beta_offset indicator - 2 bits as provided by higher layer parameter *sl-BetaOff-sets2ndSCI* and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

| |
|---|
| - Additional MCS table indicator - as defined in clause 8.1.3.1 of [6, TS 38.214]: 1 bit if one MCS table is configured by higher layer parameter *sl-Additional-MCS-Table;* 2 bits if two MCS tables are configured by higher layer parameter *sl-Additional-MCS-Table*; 0 bit otherwise. |
| - PSFCH overhead indication - 1 bit as defined clause 8.1.3.2 of [6, TS 38.214] if higher layer parameter *sl-PSFCH-Period* = 2 or 4; 0 bit otherwise. |
| - Reserved - a number of bits as determined by higher layer parameter *sl-Num-ReservedBits,* with value set to zero. |

Table 7 shows an example of the 2nd-stage SCI format.

[Table 7]

| |
|---|
| 8.4 Sidelink control information on PSSCH |
| SCI carried on PSSCH is a 2nd-stage SCI, which transports sidelink scheduling information. |
| 8.4.1 2nd-stage SCI formats |
| The fields defined in each of the 2nd-stage SCI formats below are mapped to the information bits $a_0$ to $a_{A-1}$ as follows: |
| Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$. |
| 8.4.1.1 SCI format 2-A |
| SCI format 2-A is used for the decoding of PSSCH, with HARQ operation when HARQ-ACK information includes ACK or NACK, when HARQ-ACK information includes only NACK, or when there is no feedback of HARQ-ACK information. The following information is transmitted by means of the SCI format 2-A: |
| - HARQ process number - 4 bits. |
| - New data indicator - 1 bit. |
| - Redundancy version - 2 bits as defined in Table 7.3.1.1.1-2. |
| - Source ID - 8 bits as defined in clause 8.1 of [6, TS 38.214]. |
| - Destination ID - 16 bits as defined in clause 8.1 of [6, TS 38.214]. |
| - HARQ feedback enabled/disabled indicator - 1 bit as defined in clause 16.3 of [5, TS 38.213]. |
| - Cast type indicator - 2 bits as defined in Table 8.4.1.1-1 and in clause 8.1 of [6, TS 38.214]. |
| - CSI request - 1 bit as defined in clause 8.2.1 of [6, TS 38.214] and in clause 8.1 of [6, TS 38.214]. |

Referring to FIG. 10A or 10B, in operation S8030, the first UE may receive a PSFCH based on Table 8. For example, the first UE and the second UE may determine a PSFCH resource based on Table 8, and the second UE may transmit HARQ feedback to the first UE using the a PSFCH resource.

[Table 8]

| |
|---|
| 16.3 UE procedure for reporting HARQ-ACK on sidelink |
| A UE can be indicated by an SCI format scheduling a PSSCH reception to transmit a PSFCH with HARQ-ACK information in response to the PSSCH reception. The UE provides HARQ-ACK information that includes ACK or NACK, or only NACK. |
| A UE can be provided, by *sl-PSFCH-Period,* a number of slots in a resource pool for a period of PSFCH transmission occasion resources. If the number is zero, PSFCH transmissions from the UE in the resource pool are disabled. |

(continued)

A UE expects that a slot $t'^{SL}_k \ (0 \leq k < T'_{max})$ has a PSFCH transmission occasion resource if $k \bmod N^{PSFCH}_{PSSCH} = 0$, where $t'^{SL}_k$ is defined in [6, TS 38.214], and $T'_{max}$ is a number of slots that belong to the resource pool within 10240 msec according to [6, TS 38.214], and $N^{PSFCH}_{PSSCH}$ is provided by *sl-PSFCH-Period.*

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH,* of the resource pool after a last slot of the PSSCH reception.

A UE is provided by *sl-PSFCH-RB-Set* a set of $M^{PSFCH}_{PRB, \, set}$ PRBs in a resource pool for PSFCH transmission in a PRB of the resource pool. For a number of $N_{subch}$ sub-channels for the resource pool, provided by *sl-NumSubchannel,* and a number of PSSCH slots associated with a PSFCH slot that is less than or equal to $N^{PSFCH}_{PSSCH}$, the UE allocates the $\left[(i + j \cdot N^{PSFCH}_{PSSCH}) \cdot M^{PSFCH}_{subch, \, slot}, (i + 1 + j \cdot N^{PSFCH}_{PSSCH}) \cdot M^{PSFCH}_{subch, \, slot} - 1\right]$ PRBs from the $M^{PSFCH}_{PRB, \, set}$ PRBs to slot i among the PSSCH slots associated with the PSFCH slot and sub-channel *j,* where $M^{PSFCH}_{subch, \, slot} = M^{PSFCH}_{PRB, \, set} / (N_{subch} \cdot N^{PSFCH}_{PSSCH}), \ 0 \leq i < N^{PSFCH}_{PSSCH}$, $0 \leq j < N_{subch}$, and the allocation starts in an ascending order of i and continues in an ascending order of *j.* The UE expects that $M^{PSFCH}_{PRB, \, set}$ is a multiple of PSFCH $N_{subch} \cdot N^{PSFCH}_{PSSCH}$.

The second OFDM symbol *l'* of PSFCH transmission in a slot is defined as *l' = sl-StartSymbol + sl-LengthSymbols - 2 .*

A UE determines a number of PSFCH resources available for multiplexing HARQ-ACK information in a PSFCH transmission as $R^{PSFCH}_{PRB, \, CS} = N^{PSFCH}_{type} \cdot M^{PSFCH}_{subch, \, slot} \cdot N^{PSFCH}_{CS}$ where $N^{PSFCH}_{CS}$ is a number of cyclic shift pairs for the resource pool provided by *sl-Num-MuxCS-Pair* and, based on an indication by *sl-PSFCH-CandidateResourceType,*

- if *sl-PSFCH-CandidateResourceType* is configured as *startSubCH,* $N^{PSFCH}_{type} = 1$ and the $M^{PSFCH}_{subch, \, slot}$ PRBs are associated with the starting sub-channel of the corresponding PSSCH;

(continued)

- if *sl-PSFCH-CandidateResourceType* is configured as *allocSubCH,* $N_{\text{type}}^{\text{PSFCH}} = N_{\text{subch}}^{\text{PSSCH}}$ and the $N_{\text{subch}}^{\text{PSSCH}} \cdot M_{\text{subch, slot}}^{\text{PSFCH}}$ PRBs are associated with the $N_{\text{subch}}^{\text{PSSCH}}$ subchannels of the corresponding PSSCH.

The PSFCH resources are first indexed according to an ascending order of the PRB index, from the $N_{\text{type}}^{\text{PSFCH}} \cdot M_{\text{subch, slot}}^{\text{PSFCH}}$ PRBs, and then according to an ascending order of the cyclic shift pair index from the $N_{\text{CS}}^{\text{PSFCH}}$ cyclic shift pairs.

A UE determines an index of a PSFCH resource for a PSFCH transmission in response to a PSSCH reception as $(P_{\text{ID}} + M_{\text{ID}}) mod R_{\text{PRB, CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.

A UE determines a $m_0$ value, for computing a value of cyclic shift $\alpha$ [4, TS 38.211], from a cyclic shift pair index corresponding to a PSFCH resource index and from $N_{\text{CS}}^{\text{PSFCH}}$ using Table 16.3-1.

Referring to FIG. 10A, in operation S8040, the first UE may transmit SL HARQ feedback to the BS through the PUCCH and/or the PUSCH based on Table 9.

[Table 9]

| |
|---|
| 16.5 UE procedure for reporting HARQ-ACK on uplink |
| A UE can be provided PUCCH resources or PUSCH resources [12, TS 38.331] to report |
| HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0. |
| For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources. |
| For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0. |
| From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable |
|        - for one or more PSFCH reception occasions associated with SCI format 2-A with Cast type indicator field value of "10" |
|        - generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK |
|        - for one or more PSFCH reception occasions associated with SCI format 2-A with Cast type indicator field value of "01" |

(continued)

| | |
|---|---|
| | - generate ACK if the UE determines ACK from at least one PSFCH reception occasion, from the number of PSFCH reception occasions corresponding to PSSCH transmissions, in PSFCH resources corresponding to every identity $M_{ID}$ of the UEs that the UE expects to receive the PSSCH, as described in clause 16.3; otherwise, generate NACK |
| | - for one or more PSFCH reception occasions associated with SCI format 2-B or SCI format 2-A with Cast type indicator field value of "11" |
| | - generate ACK when the UE determines absence of PSFCH reception for the last PSFCH reception occasion from the number of PSFCH reception occasions corresponding to PSSCH transmissions; otherwise, generate NACK |
| After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information. | |
| The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission. | |
| The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization. | |
| The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant. | |

A buffer status reporting (BSR) procedure is used to provide information on the amount of data available for transmission (DAT) in a UL buffer of a UE to a serving eNB. Radio resource control (RRC) may control BSR reporting by configuring two times, periodicBSR-Timer and retxBSR-Timer and selectively signaling a logical channel group (LCG) to which a logical channel is allocated, for each logical channel.

For the BSR procedure, the UE may consider all radio bearers that are not interrupted and may consider interrupted bearers. The BSR may be triggered when any of the following events occur.

- Event in which UL data for a logical channel belonging to an LCG becomes available for transmission in an RLC entity or a PDCP entity, and the data belongs to an arbitrary LCG and belongs to a logical channel with a higher priority than a priority of a logical channel for which data is already available for transmission or there is no data available for transmission (DAT) for any of the logical channels belonging to the LCG. In this case, the BSR is hereinafter referred to as "regular BSR".
- Event in which a UL resource is allocated and the number of padding bits is greater than or equal to the size of BSR MAC control element + sub header thereof. In this case, the BSR is hereinafter referred to as "padding BSR".
- Event in which the retxBSR-Timer expires, the UE has data available for transmission (DAT) for any of logical channels belonging to the LCG. In this case, the BSR is hereinafter referred to as "regular BSR".
- Event in which the periodicBSR-Timer expires. In this case, the BSR is hereinafter referred to as "periodic BSR".

For the regular and periodic BSR, when more than 1 LCGs have data available for transmission (DAT) in a TTI at which the BSR is transmitted, the UE may report Long BSR. Otherwise, the UE may report Short BSR.

When, in the BSR procedure, at least one BSR is triggered and not erased, if the UE has a UL resource allocated for new transmission during the TTI, the UE may command multiplexing and assembly procedures to generate BSR MAC control element(s), and start or restart the periodicBSR-Timer except, and start or restart the retxBSR-Timer when all the generated BSRs are each a truncated BSR.

A MAC PDU may contain at most one MAC BSR control element even when multiple events trigger the BSR until the BSR is to be transmitted. In this case, the regular BSR and the periodic BSR take precedence over the padding BSR.

The UE may restart the retxBSR-Timer when a grant for transmission of new data on any UL-SCH is indicated.

All triggered BSRs may be erased when a UL grant within a corresponding subframe is capable of accommodating all data available for transmission but is not sufficient to additionally accommodate the BSR MAC control element + sub header thereof. All the triggered BSRs may be erased when the BSR is included in the MAC PDU for transmission.

The UE may transmit at most one regular/periodic BSR in a TTI. When the UE is requested to transmit multiple MAC PDUs in a TTI, the padding BSR may be included in any of the MAC PDUs that do not contain the regular/periodic BSR.

All BSRs transmitted in a TTI always reflect a buffer status after all MAC PDUs are generated during the TTI. Each LCG may report at most one buffer status per TTI, and this value may be reported in all BSRs that report a buffer status for this LCG.

In summary, the BSR is triggered in any of the following situations:

i) When data reaches a logical channel with a higher priority than a logical channel with an empty buffer;

ii) When data becomes available for an empty buffer of a UE;

iii) When the retxBSR-Timer expires and there is still data in a buffer of the UE;

iv) When the periodicBSR-Timer expires; or

v) When the remaining space in the MAC PDU is capable of accommodating the BSR.

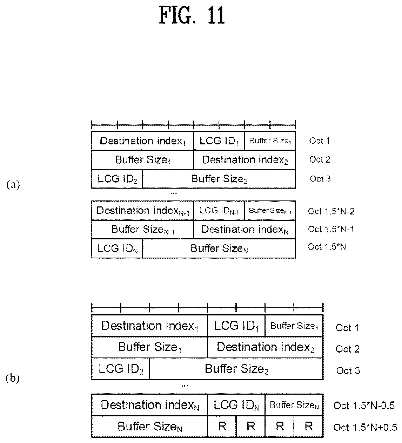

FIG. 11(a) shows even N short BSR MACs and Truncated BSR MACs, and FIG. 11(b) shows odd N short BSR MACs and Truncated BSR MACs. Referring to FIG. 11, Sidelink BSR and Truncated Sidelink BSR MAC CEs include one Destination Index field, one LCG ID field, and one Buffer Size field per reported target group. The sidelink BSR MAC CE is identified by a MAC PDU sub header with an LCID. The Destination Index field identifies a destination for ProSe Destination or V2X sidelink communication. The LCG ID field identifies a group of logical channel(s) for which a buffer status is reported. The Buffer Size field identifies a total amount of data available on all logical channels in the LCG of the ProSe Destination after all MAC PDUs for a TTI are established.

According to the existing LTE operation (3GPP TS 36.331), a discovery message is transmitted in a discovery dedicated pool using a discovery dedicated channel. Since the dedicated discovery channel is used, the corresponding message may be recognized to be a discovery message. However, in a relay operation related to 3GPP Rel-17 NR SL relay WI, the discovery channel is not separately defined, and it is determined at the RAN2 standardization meeting to identify a discovery message through a dedicated logical channel ID (LCH ID) (hereinafter, LC-ID) for discovery messages and a bearer. In addition, it is agreed to transmit a discovery message to the same resource pool as data transmission, but whether to use a dedicated discovery pool like the existing LTE is still under discussion.

In this regard, the present disclosure proposes a technical feature that needs to be considered in the SR/BSR procedure required for resource allocation when a discovery message is transmitted in mode 1 using a discovery dedicated pool like the existing LTE in NR SL.

When discovery message transmission is performed using a mode 1 method, a sidelink resource needs to be allocated for discovery message transmission. This may use an SR/BSR method used to receive sidelink resource allocation in NR. However, when the SR/BSR, which is used for general data transmission, is used, a BS needs to know that the corresponding resource request is for a discovery message. This is because the BS needs to allocate a resource to a discovery dedicated pool in the case of the discovery message.

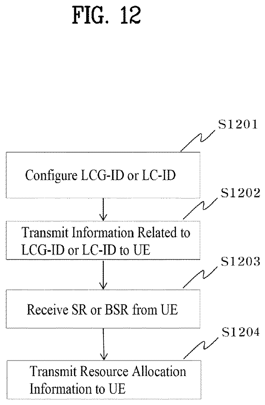

In this regard, according to an embodiment, the BS may configure a logical channel group ID (LCG-ID) or a logical channel ID (LC-ID) (S1201 in FIG. 12), and the BS may transmit information on the LCG-ID or the LC-ID to the UE (S1202 in FIG. 12). The BS may receive a scheduling request (SR) or a buffer status report (BSR) from the UE (S1203 in FIG. 12), and the BS may transmit resource allocation information to the UE (S1204 in FIG. 12).

Based on the BS configuring the LCG-ID related to sidelink discovery, the BS may recognize a resource request related to discovery from the LCG-ID included in the BSR. In addition, based on the BS configuring the LC-ID related to sidelink discovery (configuring only the LC-ID among the LCG-ID and LC-ID for discovery), the BS may recognize the resource request related to discovery from information indicating the discovery resource request included in the SR or the BSR.

In this case, the BS needs to inform the UE of the LCG-ID or LC-ID related to discovery. Therefore, based on the BS configuring the LCG-ID related to sidelink discovery, the BS may transmit information indicating that the LCG-ID is related to sidelink discovery to the UE. In addition, based on the BS configuring the LC-ID related to sidelink discovery, the BS may transmit information indicating that the LC-ID is related to sidelink discovery to the UE.

In more detail, the BS needs to configure a logical channel group ID (LCG-ID) and a logical channel ID (LC-ID) associated therewith to the UE (RRC configuration). The UE may select an LCG-ID according to service requirements of the UE, may arbitrarily select an LC-ID associated therewith, and may transmit and use data. For the discovery message, the BS needs to directly configure the LCG-ID and the LC-ID associated therewith, in which only the discovery message is used. That is, like general data transmission, the LCG-ID and the LC-ID associated therewith may be configured, it needs to possible to separately indicate/notify that this needs to be used only for the discovery message. That is, the BS may configure a specific LCG-ID as the LCG-ID for discovery and inform that the configured LCG-ID need to be used only for the discovery message. The UE may select the LC-ID associated with the LCG-ID for discovery and transmit a BSR including the LCG-ID to the BS. The BS may check/recognize that the LCG-ID indicated in the BSR is the LCG-ID configured for discovery, and allocate a resource for discovery to the UE.

The BS may configure the LC-ID for discovery and inform the UE of information thereon. Here, when the BS configures only a specific LC-ID for discovery among the LCG-ID and the LC-ID, as described above, the BSR may not include the LC-ID but includes the LCG-ID, and thus the BS may not know that the BSR is for discovery. Therefore, when the UE attempts to transmit the BSR for the discovery message, the UE may indicate this when transmitting the SR or create a new SR just for the discovery message. Alternatively, for BSR transmission, when the volume of a buffer is reported to the BS, it may be indicated that the transmit BSR is a BSR for the discovery message or an LCG-ID including the LC-ID for the discovery message.

This has an advantage of not having to configure the specific LCG-ID only for discovery because the LCG-ID needs to be determined according to the requirements of a service. This may also be applied when the BS does not know whether the corresponding SR/BSR is an SR/BSR for discovery message transmission during SR/BSR because the BS is not capable of configuring the LC-ID only for the discovery message (e.g., when the LCG-ID is determined according to service requirements, there are various LC-IDs associated therewith, and the UE arbitrarily selects and uses a specific LC-ID for the discovery message among the LC-IDs).

The resource allocation information may indicate a time-frequency resource included in a discovery dedicated resource pool, and the resource allocation information may be included in a DCI format and transmitted to the UE. Here, the resource allocation information may include a resource pool ID. That is, the BS that receives the indicated SR/BSR configured above may allocate a resource to a discovery message dedicated pool (or discovery dedicated resource pool) during resource allocation and may indicate a resource pool ID thereto to allocate a sidelink resource grant through DCI to the UE. When the resource pool ID is not indicated, the UE may select and use an arbitrary resource from a first resource pool after receiving DCI, and thus when the discovery resource pool is included in the resource, if the UE intends to create a MAC PDU from a buffer of the LC-ID corresponding to the discovery message and transmit the MAC PDU by separately indicating the discovery resource pool and informing the UE, the MAC PDU may be transmitted to the discovery resource pool.

By configuring as described above, a resource request and resource allocation for discovery may be efficiently performed without using a discovery dedicated channel like the existing LTE. In addition, in the above-described embodiments, especially when the BS configures a specific LCG-ID as the LCG-ID for discovery, a problem of not knowing whether the UE requests a discovery resource just by receiving an SR and BSR including the LCG-ID may be resolved.

A BS device related to the above description includes at least one processor, and at least one computer memory operatively connected to the at least one processor and configured to store instructions that when executed causes the at least one processor to perform operations including configuring a logical channel group ID (LCG-ID) or a logical channel ID (LC-ID), transmitting information related to the LCG-ID or the LC-ID to the UE, receiving a scheduling request (SR) or a buffer status report (BSR) from the UE, and transmitting resource allocation information to the UE, and in this case, the BS may recognize a resource request related to discovery from the LCG-ID included in the BSR based on the BS configuring an LCG-ID related to sidelink discovery, and the BS may recognize a resource request related to discovery from information indicating a discovery resource request included in the SR or the BSR based on the BS configuring an LC-ID related to sidelink discovery.

Provided is a processor for performing operations for a BS in a wireless communication system, the operations including configuring a logical channel group ID (LCG-ID) or a logical channel ID (LC-ID), transmitting information related to the LCG-ID or the LC-ID to the UE, receiving a scheduling request (SR) or a buffer status report (BSR) from the UE, and transmitting resource allocation information to the UE, and in this case, the BS may recognize a resource request related to discovery from the LCG-ID included in the BSR based on the BS configuring an LCG-ID related to sidelink discovery, and the BS may recognize a resource request related to discovery from information indicating a discovery resource request included in the SR or the BSR based on the BS configuring an LC-ID related to sidelink discovery.

Provided is a non-volatile computer-readable storage medium for storing at least one computer program including an instruction for causing at least one processor to perform operations for a BS when being executed by the at least one processor, the operations including configuring a logical channel group ID (LCG-ID) or a logical channel ID (LC-ID), transmitting information related to the LCG-ID or the LC-ID to the UE, receiving a scheduling request (SR) or a buffer status report (BSR) from the UE, and transmitting resource allocation information to the UE, and in this case, the BS may recognize a resource request related to discovery from the LCG-ID included in the BSR based on the BS configuring an LCG-ID related to sidelink discovery, and the BS may recognize a resource request related to discovery from information indicating a discovery resource request included in the SR or the BSR based on the BS configuring an LC-ID related to sidelink discovery.

A sidelink-related operating method related to the above description includes receiving information related to a logical channel group ID (LCG-ID) or a logical channel ID (LC-ID) from a BS, by a UE, transmitting a scheduling request (SR) or a buffer status report (BSR) to the BS, by the UE, and receiving resource allocation information from the BS, by the UE, and in this case, the UE may indicate a resource request related to discovery through an LCG-ID included in the BSR based on the BS configuring an LCG-ID related to sidelink discovery, and the UE may indicate a resource request related to discovery through the SR or the BSR including information indicating a discovery resource request based on the BS configuring an LC-ID related to sidelink discovery.

A UE device includes at least one processor, and at least one computer memory operatively connected to the at least one processor and configured to store instructions that when executed causes the at least one processor to perform operations including receiving information related to a logical channel group ID (LCG-ID) or a logical channel ID (LC-ID) from a BS, transmitting a scheduling request (SR) or a buffer status report (BSR) to the BS, and receiving resource allocation information from the BS, and in this case, the UE may indicate a resource request related to discovery through an LCG-ID included in the BSR based on the BS configuring an LCG-ID related to sidelink discovery, and the UE may indicate a resource request related to discovery through the SR or the BSR including information indicating a discovery resource request based on the BS configuring an LC-ID related to sidelink discovery.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

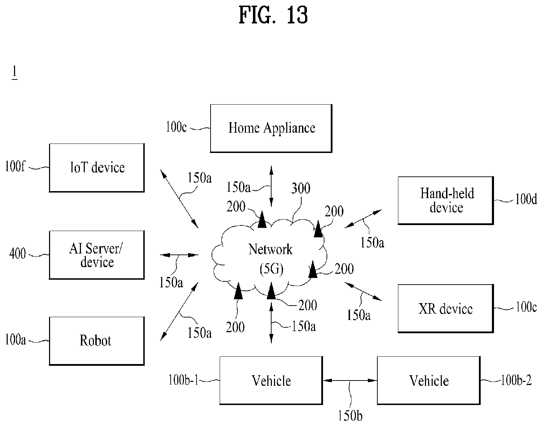

FIG. 13 illustrates a communication system 1 applied to the present disclosure.

Referring to FIG. 13, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

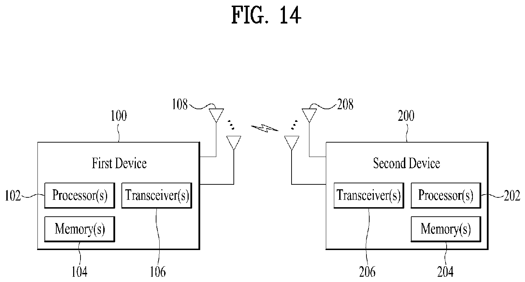

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

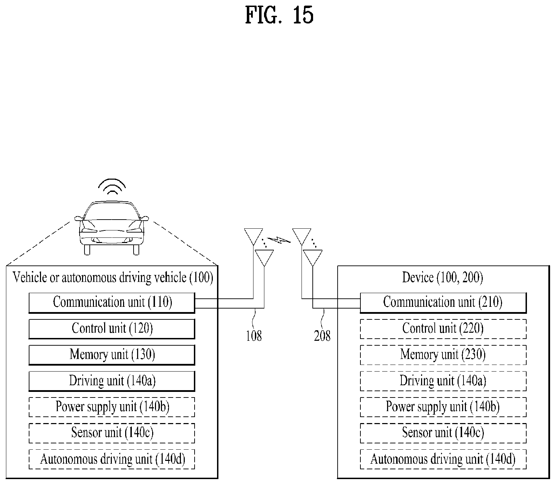

FIG. 15 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 43, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

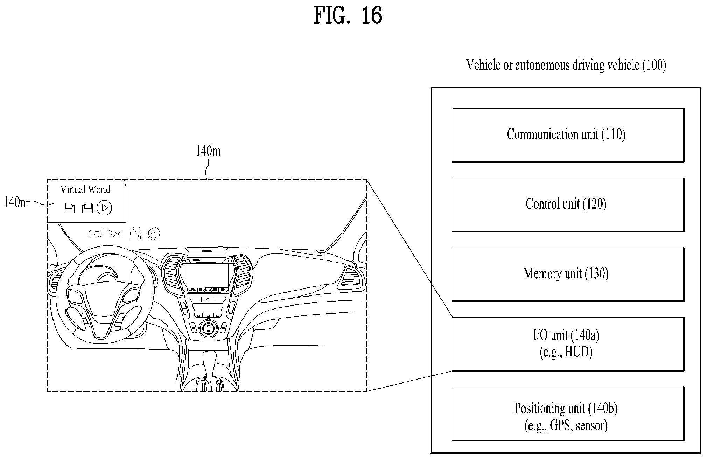

FIG. 16 illustrates a vehicle applied to the present disclosure. The vehicle may be implemented as a transport means, an aerial vehicle, a ship, etc.

Referring to FIG. 16, a vehicle 100 may include a communication unit 110, a control unit 120, a memory unit 130, an I/O unit 140a, and a positioning unit 140b. Herein, the blocks 110 to 130/140a and 140b correspond to blocks 110 to 130/140 of FIG. 43.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

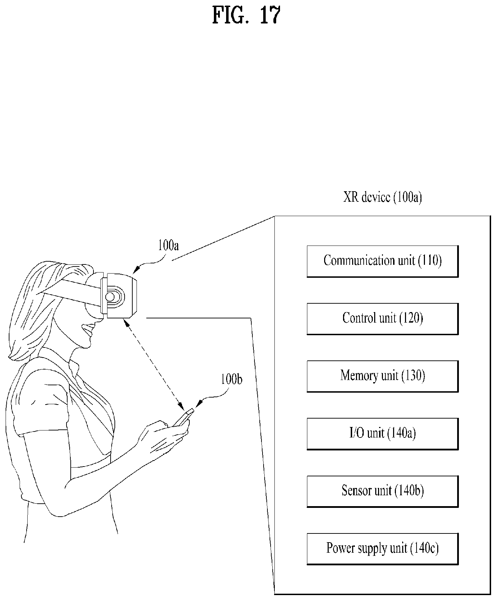

FIG. 17 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 17, an XR device 100a may include a communication unit 110, a control unit 120, a memory unit 130, an I/O unit 140a, a sensor unit 140b, and a power supply unit 140c. Herein, the blocks 110 to 130/140a to 140c correspond to the blocks 110 to 130/140 of FIG. 43, respectively.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

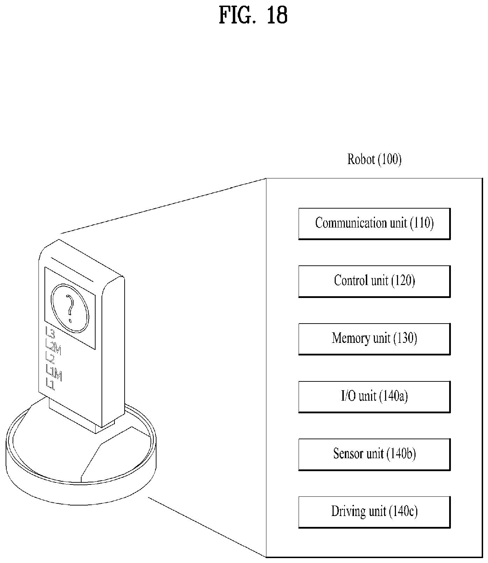

FIG. 18 illustrates a robot applied to the present disclosure. The robot may be categorized into an industrial robot, a medical robot, a household robot, a military robot, etc., according to a used purpose or field.

Referring to FIG. 18, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 14, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

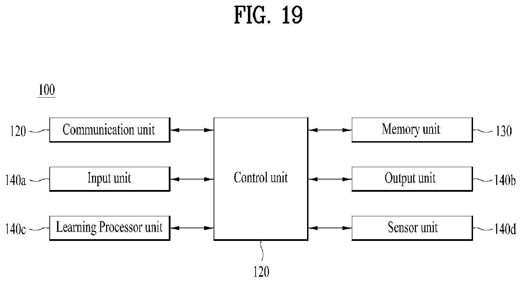

FIG. 19 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 19, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 14, respectively.

The communication unit 110 may transmit and receive wired/radio signals (e.g., sensor information, user input, learning models, or control signals) to and from external devices such as other AI devices (e.g., 100x, 200, or 400 of FIG. 13) or an AI server (e.g., 400 of FIG. 13) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 13). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 13). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

**INDUSTRIAL APPLICABILITY**

The above-described embodiments of the present disclosure are applicable to various mobile communication systems.

**Claims**

1. A sidelink-related operating method of a base station (BS) in a wireless communication system, the method comprising:

    configuring a logical channel group ID (LCG-ID) or a logical channel ID (LC-ID), by the BS;
    transmitting information related to the LCG-ID or the LC-ID to a user equipment (UE), by the BS;
    receiving a scheduling request (SR) or a buffer status report (BSR) from the UE, by the BS; and
    transmitting resource allocation information to the UE, by the BS,
    wherein:

        the BS recognizes a resource request related to discovery from an LCG-ID included in the BSR based on the BS configuring an LCG-ID related to sidelink discovery; and
        the BS recognizes a resource request related to discovery from information indicating a discovery resource request included in the SR or the BSR based on the BS configuring an LC-ID related to sidelink discovery.

2. The method of claim 1, wherein the BS transmits information indicating that the LCG-ID is related to sidelink discovery, to the UE, based on the BS configuring the LCG-ID related to sidelink discovery.

3. The method of claim 1, wherein the BS transmits information indicating that the LC-ID is related to sidelink discovery, to the UE, based on the BS configuring the LC-ID related to sidelink discovery.

4. The method of claim 2, wherein the SR is generated for sidelink discovery.

5. The method of claim 1, wherein the resource allocation information indicates a time-frequency resource included in a discovery dedicated resource pool.

6. The method of claim 5, wherein the resource allocation information is included in a DCI format and transmitted to the UE.

7. The method of claim 1, wherein the resource allocation information includes a resource pool ID.

8. The method of claim 1, wherein the BSR includes an LCG-ID related to a destination index and a buffer size.

9. A base station (BS) device in a wireless communication system, the BS comprising:

at least one processor; and
at least one computer memory operatively connected to the at least one processor and configured to store instructions that when executed causes the at least one processor to perform operations including:

configuring a logical channel group ID (LCG-ID) or a logical channel ID (LC-ID);
transmitting information related to the LCG-ID or the LC-ID to a user equipment (UE);
receiving a scheduling request (SR) or a buffer status report (BSR) from a user equipment (UE); and
transmitting resource allocation information to the UE,
wherein:

the BS recognizes a resource request related to discovery from the LCG-ID included in the BSR based on the BS configuring an LCG-ID related to sidelink discovery; and
the BS recognizes a resource request related to discovery from information indicating a discovery resource request included in the SR or the BSR based on the BS configuring an LC-ID related to sidelink discovery.

10. A processor for performing operations for a base station (BS) in a wireless communication system, the operations comprising:

configuring a logical channel group ID (LCG-ID) or a logical channel ID (LC-ID);
transmitting information related to the LCG-ID or the LC-ID to a user equipment (UE);
receiving a scheduling request (SR) or a buffer status report (BSR) from the UE; and
transmitting resource allocation information to the UE,
wherein:

the BS recognizes a resource request related to discovery from the LCG-ID included in the BSR based on the BS configuring an LCG-ID related to sidelink discovery; and
the BS recognizes a resource request related to discovery from information indicating a discovery resource request included in the SR or the BSR based on the BS configuring an LC-ID related to sidelink discovery.

11. A non-volatile computer-readable storage medium for storing at least one computer program including an instruction for causing at least one processor to perform operations for a base station (BS) when being executed by the at least one processor, the operations comprising:

configuring a logical channel group ID (LCG-ID) or a logical channel ID (LC-ID);
transmitting information related to the LCG-ID or the LC-ID to a user equipment (UE);
receiving a scheduling request (SR) or a buffer status report (BSR) from the UE; and
transmitting resource allocation information to the UE;
wherein:

the BS recognizes a resource request related to discovery from the LCG-ID included in the BSR based on the BS configuring an LCG-ID related to sidelink discovery; and
the BS recognizes a resource request related to discovery from information indicating a discovery resource request included in the SR or the BSR based on the BS configuring an LC-ID related to sidelink discovery.

12. A sidelink-related operating method of a user equipment (UE) in a wireless communication system, the method comprising:

receiving information related to a logical channel group ID (LCG-ID) or a logical channel ID (LC-ID) from a base station (BS), by the UE;
transmitting a scheduling request (SR) or a buffer status report (BSR) to the BS, by the UE; and
receiving resource allocation information from the BS, by the UE,
wherein:

the UE indicates a resource request related to discovery through an LCG-ID included in the BSR based on the BS configuring an LCG-ID related to sidelink discovery; and
the UE indicates a resource request related to discovery through the SR or BSR including information indicating a discovery resource request based on the BS configuring an LC-ID related to sidelink discovery.

13. A user equipment (UE) device in a wireless communication system, comprising:

at least one processor; and
at least one computer memory operatively connected to the at least one processor and configured to store instructions that when executed causes the at least one processor to perform operations including:

receiving information related to a logical channel group ID (LCG-ID) or a logical channel ID (LC-ID) from a base station (BS);
transmitting a scheduling request (SR) or a buffer status report (BSR) to the BS; and
receiving resource allocation information from the BS,
wherein:

the UE indicates a resource request related to discovery through an LCG-ID included in the BSR based on the BS configuring an LCG-ID related to sidelink discovery; and
the UE indicates a resource request related to discovery through the SR or BSR including information indicating a discovery resource request based on the BS configuring an LC-ID related to sidelink discovery.

FIG. 1

# FIG. 2

# FIG. 3

(a)

(b)

## FIG. 4

# FIG. 5

gNB
- Inter-Cell RRM
- RB Control
- Connection Mobility Control
- Radio Access Control
- Measurement Configuration and Provisioning
- Dynamic Resource Allocation (Scheduler)

NG-RAN

AMF
- NAS Security
- Idle-State Mobility Processing

SMF
- UE IP Address Allocation
- PDU Session Control

UPF
- Mobility Anchoring
- PDU Processing

5GC          Internet

# FIG. 6

| | | | | | | | |
|---|---|---|---|---|---|---|---|
| ··· | One Frame (10ms) | | | | | | ··· |

| ··· | Half-Frame (5ms) | Half-Frame (5ms) | ··· |
|---|---|---|---|

| ··· | Subframe 0 (1ms) | ··· | Subframe 4 (1ms) | Subframe 5 (1ms) | ··· | Subframe 9 (1ms) | ··· |
|---|---|---|---|---|---|---|---|

Subframe (1ms)

15KHz — Slot 0 (14symbols)

1ms

30KHz — Slot 0 (14symbols) | Slot 1

500us

60KHz — Slot 0 (14symbols) | Slot 1 | Slot 2 | Slot 3

250us

120KHz — Slot 0 (14symbols) | Slot 1 | Slot 2 | Slot 3 | Slot 4 | Slot 5 | Slot 6 | Slot 7

125us

FIG. 7

# FIG. 8

UE A | UE B

PDCP ←→ PDCP

RLC ←→ RLC

MAC ←→ MAC

PHY ←→ PHY

PU5-U

(a)

UE A | UE B

RRc ←→ RRC

RLC ←→ RLC

MAC ←→ MAC

PHY ←→ PHY

PU5-C

(b)

# FIG. 9

PU5-U

(a)

PU5-U

(b)

# FIG. 10

(a)                    (b)

# FIG. 11

(a)

| Destination index$_1$ | LCG ID$_1$ | Buffer Size$_1$ | Oct 1 |
| Buffer Size$_1$ | Destination index$_2$ | | Oct 2 |
| LCG ID$_2$ | Buffer Size$_2$ | | Oct 3 |
| ... | | | |
| Destination index$_{N-1}$ | LCG ID$_{N-1}$ | Buffer Size$_{N-1}$ | Oct 1.5*N-2 |
| Buffer Size$_{N-1}$ | Destination index$_N$ | | Oct 1.5*N-1 |
| LCG ID$_N$ | Buffer Size$_N$ | | Oct 1.5*N |

(b)

| Destination index$_1$ | LCG ID$_1$ | Buffer Size$_1$ | Oct 1 |
| Buffer Size$_1$ | Destination index$_2$ | | Oct 2 |
| LCG ID$_2$ | Buffer Size$_2$ | | Oct 3 |
| ... | | | |
| Destination index$_N$ | LCG ID$_N$ | Buffer Size$_N$ | Oct 1.5*N-0.5 |
| Buffer Size$_N$ | R | R | R | R | Oct 1.5*N+0.5 |

# FIG. 12

Configure LCG-ID or LC-ID — S1201

Transmit Information Related to LCG-ID or LC-ID to UE — S1202

Receive SR or BSR from UE — S1203

Transmit Resource Allocation Information to UE — S1204

# FIG. 13

FIG. 14

FIG. 15

| Vehicle or autonomous driving vehicle (100) | | Device (100, 200) |
|---|---|---|
| Communication unit (110) | | Communication unit (210) |
| Control unit (120) | | Control unit (220) |
| Memory unit (130) | | Memory unit (230) |
| Driving unit (140a) | | Driving unit (140a) |
| Power supply unit (140b) | | Power supply unit (140b) |
| Sensor unit (140c) | | Sensor unit (140c) |
| Autonomous driving unit (140d) | | Autonomous driving unit (140d) |

108     208

# FIG. 16

Vehicle or autonomous driving vehicle (100)

Communication unit (110)

Control unit (120)

Memory unit (130)

I/O unit (140a)
(e.g., HUD)

Positioning unit (140b)
(e.g., GPS, sensor)

140m

140n

Virtual World

FIG. 17

XR device (100a)

Communication unit (110)

Control unit (120)

Memory unit (130)

I/O unit (140a)

Sensor unit (140b)

Power supply unit (140c)

100a

100b

# FIG. 18

Robot (100)

Communication unit (110)

Control unit (120)

Memory unit (130)

I/O unit (140a)

Sensor unit (140b)

Driving unit (140c)

FIG. 19

100

| 120 — Communication unit | | Control unit | | Memory unit | 130 |
| 140a — Input unit | | | | Output unit | 140b |
| 140c — Learning Processor unit | | | | Sensor unit | 140d |

120

**EP 4 333 476 A1**

## INTERNATIONAL SEARCH REPORT

| | International application No. |
|---|---|
| | **PCT/KR2022/006028** |

### A. CLASSIFICATION OF SUBJECT MATTER

**H04W 8/00**(2009.01)i; **H04W 28/02**(2009.01)i; **H04W 72/04**(2009.01)i; **H04W 4/40**(2018.01)i; **H04W 92/18**(2009.01)i

According to International Patent Classification (IPC) or to both national classification and IPC

### B. FIELDS SEARCHED

Minimum documentation searched (classification system followed by classification symbols)

H04W 8/00(2009.01); H04W 4/40(2018.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크 디스커버리(sidelink discovery), LCG-ID(logical channel group identifier), LC-ID(logical channel identifier), SR(scheduling request), BSR(buffer status report), 자원 요청(resource request)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0042930 A (ZTE CORPORATION) 20 April 2021 (2021-04-20)<br>See paragraphs [0039]-[0145]. | 1-13 |
| Y | US 2017-0188221 A1 (LG ELECTRONICS INC.) 29 June 2017 (2017-06-29)<br>See paragraphs [0061]-[0095]; and claims 1-11. | 1-13 |
| A | US 2021-0014662 A1 (SUN PATENT TRUST) 14 January 2021 (2021-01-14)<br>See paragraphs [0108]-[0124] and [0210]-[0285]; and figure 12. | 1-13 |
| A | ETRI. Resource allocation for Type 2 discovery. R2-142702, 3GPP TSG-RAN WG2 Meeting #86. Seoul, Republic of Korea. 10 May 2014.<br>See pages 1-3. | 1-13 |
| A | INTERDIGITAL INC. Discovery procedure for Sidelink relay. R2-2100522, 3GPP RAN WG2 Meeting #113-e, Electronic. 15 January 2021.<br>See pages 1-3. | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 August 2022** | **12 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006028**

| Patent document cited in search report | | | Publication date (day/month/year) | Patent family member(s) | | | Publication date (day/month/year) |
|---|---|---|---|---|---|---|---|
| KR | 10-2021-0042930 | A | 20 April 2021 | CN | 110830952 | A | 21 February 2020 |
| | | | | EP | 3836686 | A1 | 16 June 2021 |
| | | | | US | 2021-0168814 | A1 | 03 June 2021 |
| | | | | WO | 2020-030177 | A1 | 13 February 2020 |
| US | 2017-0188221 | A1 | 29 June 2017 | CN | 106576336 | A | 19 April 2017 |
| | | | | CN | 106576336 | B | 24 April 2020 |
| | | | | US | 10080128 | B2 | 18 September 2018 |
| | | | | WO | 2016-022001 | A1 | 11 February 2016 |
| US | 2021-0014662 | A1 | 14 January 2021 | CN | 106464715 | A | 22 February 2017 |
| | | | | CN | 106464715 | B | 07 January 2020 |
| | | | | EP | 2942993 | A1 | 11 November 2015 |
| | | | | EP | 2942993 | B1 | 25 March 2020 |
| | | | | EP | 3651486 | A1 | 13 May 2020 |
| | | | | JP | 2017-517966 | A | 29 June 2017 |
| | | | | JP | 2020-043587 | A | 19 March 2020 |
| | | | | JP | 6628102 | B2 | 08 January 2020 |
| | | | | KR | 10-2017-0004987 | A | 11 January 2017 |
| | | | | KR | 10-2304215 | B1 | 23 September 2021 |
| | | | | US | 10123201 | B2 | 06 November 2018 |
| | | | | US | 10524111 | B2 | 31 December 2019 |
| | | | | US | 10827343 | B2 | 03 November 2020 |
| | | | | US | 11297483 | B2 | 05 April 2022 |
| | | | | US | 2017-0064534 | A1 | 02 March 2017 |
| | | | | US | 2019-0028877 | A1 | 24 January 2019 |
| | | | | US | 2020-0154260 | A1 | 14 May 2020 |
| | | | | WO | 2015-169464 | A1 | 12 November 2015 |

Form PCT/ISA/210 (patent family annex) (July 2019)